# NEUE EUROPÄISCHE PATENTSCHRIFT

(11) **EP 0 313 834 B2**
(45) Veröffentlichungstag und Bekanntmachung des Hinweises auf die Entscheidung über den Einspruch: **28.09.1994**
(45) Hinweis auf die Patenterteilung: 01.04.1992
(21) Anmeldenummer: 88115816.6
(22) Anmeldetag: 26.09.1988
(51) Int. Cl.: A01C 7/20

(54) **Drillmaschine**
Drill
Semoir

(30) Priorität: 15.10.1987 DE 3734867
(43) Veröffentlichungstag der Anmeldung: 03.05.1989
(73) Patentinhaber: Rabewerk GmbH + Co., 49152 Bad Essen (DE)
(72) Erfinder: Gehrke, Rudolf, Dipl.-Ing., D-2990 Papenburg 1 (DE)
(74) Vertreter: Missling, Arne, Dipl.-Ing.

(56) Entgegenhaltungen:
- EP-A- 0 210 517
- DE-A- 3 517 993
- DE-B- 69 843
- DE-U- 7 825 061
- FR-A- 1 322 919
- FR-A- 2 471 125
- GB-A- 967 244
- SU-A- 296 501
- US-A- 2 872 248

## Beschreibung

Die Erfindung betrifft eine Drillmaschine bei der die Säschardruckkraft mit Hilfe von Federelementen auch bei sich ändernden Säscharstellungen über einen relativ großen Schwenkbereich im wesentlichen konstant gehalten werden kann.

Aus der SU-269 501 ist eine mit einem Säschar Drillmaschine bekannt, das schwenkbar am Rahmen befestigt und über eine Führungseinrichtung relativ zum Rahmen gehaltert ist.

In Verlängerung der Säscharhalterung ist ein Formstück angeordnet, an der ein flexibles Verbindungsstück angebracht ist, das über eine Zugfeder am Rahmen angeschlossen ist. Das Profil der Kurvenscheibe soll so gestaltet sein, daß ein gleichbleibender Schardruck im Zusammenwirken mit dem Verbindungstück erhalten wird. Die Federspannung ist für jede Feder einzeln einstellbar.

Eine weitere Drillmaschine, ist in der DE-GMS 78 25 061 beschrieben, die eine Drillmaschine mit einem Rahmen und mit am Rahmen höhenbeweglich angebrachten Säscharen zeigt. Bei Betrieb stützt sich die Drillmaschine über Laufräder auf dem Boden ab. Die Säschare sind mit dem Rahmen über Halterungen und Federelemente verbunden, deren Vorspannung mittels einer zentralen Einstellvorrichtung veränderbar ist.

Der Erfindung liegt die Aufgabe zugrunde, eine Drillmaschine vorzuschlagen bei der nicht nur die Schardruckkraft konstant gehalten wird, sondern bei der auch mittels des Formkörpers die Vorspannkraft der Federelemente einstellbar ist, wobei der Schwenkpunkt der die Säschare tragenden Säschararme so tief wie notwendig belassen werden kann, damit das Saatgut trotz Änderung der Bodenverhältnisse in gleicher Tiefe ablegbar ist und die Säschare in etwa senkrecht in dem Boden liegen.

Diese Aufgabe wird mit den Merkmalen des Anspruches 1 gelöst.

Weitere Ausgestaltungen der Erfindung ergeben sich aus den Unteransprüchen 2 bis 5.

Die mit der Erfindung erzielten Vorteile bestehen im wesentlichen darin, daß sowohl durch Zusammenwirken des Zugbandes mit dem Formstück beim Verschwenken der Säschare der wirksame Angriffspunkt der Feder am Rahmen und damit der Hebelarm sich kontinuierlich ändert, so daß die auf den Säschar einwirkende Kraft auch bei unterschiedlichen Schwenkstellungen konstant bleibt als auch die Einstellung der Vorspannkraft durchgeführt werden kann. Des weiteren kann mit einer zentralen Einstellvorrichtung die Säschardruckkraft vom Schleppersitz aus eingestellt werden. Dadurch, daß der Schwenkpunkt der die Säschare tragenden Säschararme so tief wie möglich am Rahmen der Drillmaschine liegt, können die Säschare eine fast vertikale Bewegung ausführen. Von Vorteil ist es auch, daß die Einstellvorrichtung für den Schardruck einen einfachen Aufbau hat und wenig Raum beansprucht, so daß sie unter dem ziemlich tief liegenden Vorratsbehälter ausreichend Platz findet und die gedrungene Bauweise der Drillmaschine beibehalten werden kann.

Ein Ausführungsbeispiel der Erfindung ist in der Zeichnung dargestellt und wird im folgenden näher erläutert. Es zeigen:
Fig. 1 eine Seitenansicht der erfindungsgemäßen Drillmaschine mit einem weggelassenen Rad,
Fig. 2 eine vergrößerte Seitenansicht gemäß Fig. 1.

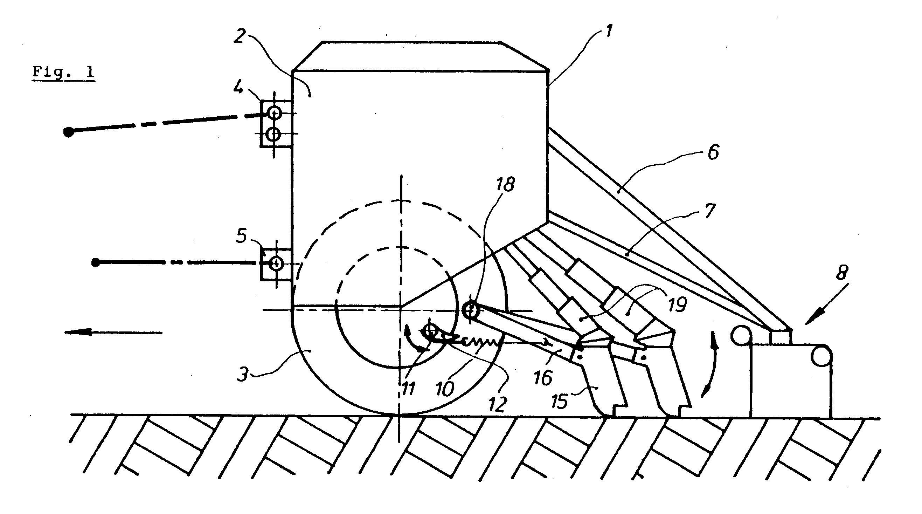

Die Fig. 1 zeigt in Seitenansicht eine erfindungsgemäß ausgebildete Drillmaschine. Die Drillmaschine hat einen Rahmen 1, der von Rädern 3 getragen ist. Zum Anschluß des Rahmens 1 an den nicht dargestellten Schlepper dienen Anschlußpunkte 4 und 5, an denen der Oberlenker bzw. die Unterlenker eines nicht weiter dargestellten Dreipunktgestänges anschließbar sind. Des weiteren hat die erfindungsgemäße Drillmaschine einen Vorratsbehälter 2 für das Saatgut. Mit dem Vorratsbehälter 2 sind Särohre 19 verbunden, über die das Saatgut den Säscharen 15 zugeführt wird. Die Rohre 19 sind flexibel ausgebildet, so daß die Säschare 15 um eine am Rahmen 2 befestigte Achse 18 schwenkbar sind. Der Anpreßdruck der Säschare 15 gegenüber dem Boden wird mit Hilfe eines Federelemente 10 erhalten das wirkungsmäßig zwischen den Säscharen und dem Rahmen 1 eingeschaltet ist.

Hinter den Säscharen ist eine Zustreicheinrichtung 8 angeordnet, die über Streben 6 und 7 am Rahmen 1 befestigt ist.

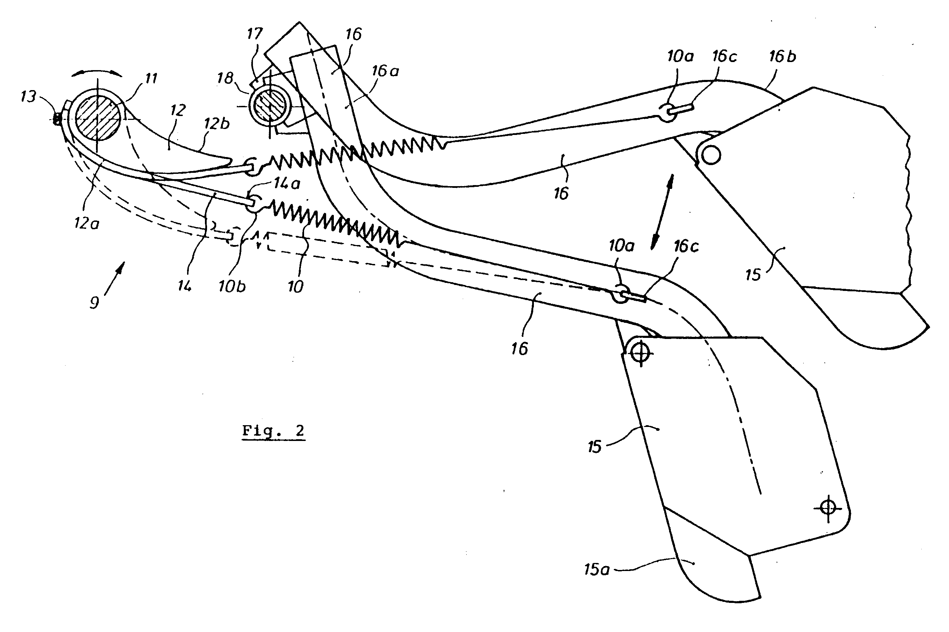

Fig. 2 zeigt in vergrößerter Darstellung die gleiche Seitenansicht wie in Fig. 1, jedoch sind nur die wesentlichen, hier interessierenden Teile dargestellt. Die Säschararme 16 sind um eine Achse 18 schwenkbar angeordnet, wobei hier die Verbindung zwischen den Säschararmen 16 und der Achse 18 über Paßstücke 17 erhalten wird, die einerseits die Achse 18 umgreifen und andererseits fest mit den Säschararmen 16 verbunden sind. Die Säschare 15, die an den freien Enden der Säschararme 16 angeordnet sind, können somit frei um die Achse 18 schwenken.

Der erforderliche Anpreßdruck der Säschare 15, die mit Säscharspitzen 15a versehen sind, erfolgt über ein Federelement 10, das einerseits am Säschararm 16 über einen Haken 10a befestigt ist und andererseits an einem Ende eines Zugbandes 14. Für die Befestigung des Federelementes am Zugband 14 dient eine Bohrung 14a. Das Zugband weist darüberhinaus weitere Bohrungen 14a auf, so daß durch Wahl der entsprechenden Bohrungen die Vorspannung des Federelementes 10 individuell für jeden Säschar 15 einstellbar ist.

Das andere Ende' des Zugbandes 14 ist an einem Formstück 12 im Befestigungspunkt 13 befestigt, das seinerseits auf einer Welle 11 befestigt ist, die im Rahmen 1 der Drillmaschine gelagert ist. Die Fläche 12a des Formstücks 12, die mit dem Zugband 14 zusammenwirkt, ist konvex ausgebildet, so daß sich der wirksame Hebelarm bei einer Verschwenkung des Säschars 15, wie dies in Fig. 2 dargestellt ist, entsprechend der Änderung der Federspannung entweder vergrößert oder aber verkleinert, so daß die auf das Schar 15 ausgeübte Druckkraft und damit die Anpreßkraft des Säschars 15 in den Boden bei allen infrage kommenden Ausschwenkwinkeln in etwa gleich gehalten wird. Es ist andererseits auch möglich, durch entsprechende Formgebung der konvexen Fläche 12a des Formstücks 12 die Anpreßkraft des Säschars im Boden in vorbestimmter Art und Weise zu ändern, z.B. derart, daß in ganz tiefen Lagen des Säschars ein geringerer Schardruck erhalten wird als in den durchschnittlichen Arbeitslagen, während wiederum bei erhöhten Scharlagen die Druckkraft abnimmt.

Die mit 9 bezeichnete Einstellvorrichtung dient sowohl dazu, den Anpreßdruck sämtlicher Säschare gleichmäßig zu verstellen, wie auch den Anpreßdruck jedes einzelnen Säschars individuell zu verstellen. Für die individuelle Verstellung des Anpreßdrucks jedes einzelnen Säschars kann entweder, wie dies bereits zuvor erwähnt worden ist, der Anlenkpunkt 14a am Zugband 14 verändert werden, wodurch bei gleichem Hebelarm die Vorspannung des Federelementes 10 verändert wird, was gleichzeitig eine Veränderung des Schardrucks zur Folge hat. Eine andere Möglichkeit der Einstellung besteht darin, daß das Formstück 12 relativ zur Welle 11 verschoben wird, so daß hierdurch gleichfalls individuell der Hebelarm wie auch die Vorspannung bei einer vorgegebenen Scharstellung verändert wird.

Eine gemeinsame Veränderung aller Scharkräfte kann z.B. dadurch erfolgen, daß bei festgelegten Formstücken auf der Welle 11 die Welle 11 verschwenkt wird, was z.B. mit Hilfe einer Verstelleinrichtung durchführbar ist, die vom Schlepper aus betätigt wird.

Vorteilhaft ist es, zusätzliche Formstücke auch noch am Säschararm selber anzuordnen, wobei dann das Federelement gleichfalls über ein weiteres Zugband an den Säschararmen angeschlossen ist.

## Patentansprüche

1. Drillmaschine mit einem Rahmen (1), der über Laufräder (3) am Boden abgestützt ist, einem Vorratsbehälter (2) für das Saatgut, mit einer Dosiervorrichtung, mit am Rahmen (1) in der Höhe schwenkbar angeordneten Säscharen (15), die jeweils mit dem Rahmen (1) über Federelemente (10) verbunden sind, deren Vorspannung einzeln oder mit Hilfe einer zentralen Einstellvorrichtung (9) veränderbar ist, wobei jedes Federelement (10) über ein flexibles Zugband (14) am Rahmen (1) und/oder am Säschar (15) angeschlossen ist, und das Zugband (14) mit einem Formstück (12) zusammenwirkt, wobei die mit dem Zugband (14) zusammenwirkende Fläche (12a) des Formstückes (12) konvex ausgeführt und die Krümmung so gewählt ist. daß das Zugband (14) beim Verschwenken des zugehörigen Säschares (15) derart verformt wird. daß die über das Federelement (10) auf das Säschar (15) ausgeübte Kraft konstant bleibt oder sich in vorgegebener Weise ändert, wobei jedes Formstück (12) verdreh- und feststellbar ausgebildet ist.

2. Drillmaschine nach Anspruch 1, dadurch gekennzeichnet. daß das Zugband (14) mehrere Anschlußpunkte (14a) für die Einstellung der Vorspannung des Federelementes (10) aufweist.

3. Drillmaschine nach Anspruch 1 oder 2, dadurch gekennzeichnet, dgl jedes Formstück (12) relativ zu einer Welle (11) verdreh- und festellbar ausgebildet ist.

4. Drillmaschine nach Anspruch 3, dadurch gekennzeichnet, daß die Welle (11) zentral verstellbar ist.

5. Drillmaschine nach Anspruch 4, dadurch gekennzeichnet, daß die Welle (11) vom Fahrersitz des Schleppers aus verstellbar ist.

## Claims

1. Drilling machine with a frame (1), which is supported by means of track wheels (3) on the ground, a supply container (2) for the seed material, with an apporting means, with seed shares (15) which are arranged to be swivellable vertically on the frame and which are respectively connected to the frame (1) by way of spring elements (10), the biassing of which is variable individually or with aid of a central adjustment means (9), each spring element (10) being connected through a flexible tensioning band (14) to the frame (1) and/or to the seed share (15) and the tensioning band (14) coacts with a shaped element (12), that surface (12a) of the shaped member (12) which coacts with the tensioning band (14) being made convex and the curvature being so chosen that the tensioning band (14), with swinging of the associated seed share (15), is so deformed that the force exerted through the spring element (10) on to the seed share (15) remains constant or is modified in a prescribed manner, and each shaped member (12) is fixed on a shaft (11) and is so constructed that it can be turned and fixed relatively to the shaft (11).

2. Drilling machine according to claim 1, wherein the tensioning band (14) comprises several connection points (14a) for the adjustment of the biassing of the spring element (10).

3. Drilling machine according to claim 1 or 2, wherein each shaped member (12) is constructed so that it can be turned and fixed relatively to the shaft (11).

4. Drilling machine according to claim 3, wherein the shaft (11) is centrally adjustable.

5. Drilling machine according to claim 4, wherein the shaft (11) is adjustable from the driving seat of the tractor.

## Revendications

1. Semoir comportant un chassis (1), qui s'appuie sur le sol au moyen de roues (3), un réservoir de stockage (2) pour les semences, avec un appareil de dosage, comportant, sur le châssis (1), des socs de semoir (15) disposés de façon à pouvoir pivoter en hauteur, qui sont chacun reliés avec le châssis (1) par l'intermédiaire d'élements de ressorts (10), dont il est possible de changer la tension initiale, séparément ou au moyen d'un dispositif central de réglage (9),
dans lequel chaque élément de ressort (10) est relié au chassis (1) et/ou au soc de semoir (15) par l'intermédiaire d'une bande de traction (14), et en ce que la bande de traction (14) a une action combinée avec une pièce de forme (12), étant entendu que la surface (12a) de la pièce de forme (12) agissant en combinaison avec la bande de traction (14) est réalisée avec une courbure convexe et que la courbure est choisie de telle façon que la bande de traction (14), lors du pivotement du soc de semoir (15) correspondant, soit déformée de telle manière que la force s'exerçant, par l'intermédiaire de l'élément de ressort (10), sur le soc de semoir (15) reste constante ou se modifie d'une façon déterminée à l'avance, et chaque pièce de forme (12) est réalisée de façon à pouvoir tourner et pouvoir être immobilisée.

2. Semoir suivant la revendication 1, caractérisé en ce que la bande de tration (14) présente plusieurs points de raccordement (14a) pour le réglage de la tension initiale de l'élément de ressort (10).

3. Semoir suivant la revendication 1 ou 2, caractérisé en ce que chaque pièce de forme (12) est réalisée de façon à pouvoir tourner et à être immobilisée par rapport à l'axe (11).

4. Semoir suivant la revendication 3 caractérisé en ce que l'axe (11) peut-être réglée de façon centralisée.

5. Semoir suivant la revendication 4, caractérisé en ce que l'axe (11) peut-être réglée depuis le siège du conducteur du tracteur.
